Europäisches Patentamt

European Patent Office

Office européen des brevets

(19)

(11) Publication number: **0 189 971**
**A2**

(12)                    · **EUROPEAN PATENT APPLICATION**

(21) Application number: 86300083.2

(22) Date of filing: 08.01.86

(51) Int. Cl.⁴: **A01N 55/02** ,
//(A01N55/02,43:82)

(30) Priority: 24.01.85 IL 74146

(43) Date of publication of application:
06.08.86 Bulletin 86/32

(84) Designated Contracting States:
AT BE CH DE FR GB IT LI NL SE

(71) Applicant: PALIMPORT LTD.
18 Rival Street
Tel-Aviv 67 778(IL)

(72) Inventor: Ovadia, Shmuel
26 Mordei Hageitaot Street
Rehovot 76 464(IL)

(74) Representative: Spencer, Graham Easdale et al
A.A. Thornton & CO Northumberland House
303-306, High Holborn
London WC1V 7LE(GB)

(54) Composition containing a thiadiazole derivative and method for treating plants against bacteria.

(57) Method and compositions for the prevention and control of bacterial diseases in plants, comprising using a copper compound in combination with etridiazole. Various additives such as acids, surfactants and pentachloronitrobenzone may be added.

EP 0 189 971 A2

Composition containing a thiadiazole derivative and method for treating plants against bacteria

FIELD OF THE INVENTION

The present invention concerns a method and means for the prevention and control of bacterial diseases in plants. Plant diseases caused by bacteria are spread worldwide, attacking numerous crops and causing significant economic damage. Bacterial spot disease caused by Xanthomonas vesicatoriathat attacks young pepper plants can cause a loss of 40% of the yield. In young tomato plants that are attacked by the tomato specic bacteria Pseudomonas tomato, the loss of yield can reach up to 70%. Other crops of great economic importance such as cotton, wheat, tobacco and others are also commonly infected by bacterial diseases which may cause severe damage.

BACKGROUND OF THE INVENTION AND PRIOR ART

Severe and widespread cases of bacterial diseases are often caused for the following reasons:

a. Existence of wide regions in the world with good climatic conditions for bacteria development and spreading of diseases.

b. Bacteria have relatively high survival ability also without host plants, which enables them to remain alive (inactive) in the soil or plant residues for several seasons.

c. One of the main ways for infection and primary dispersion of bacterial diseases is through seeds, where the bacteria are either inside or outside the seeds. This fact is very important in the dispersion of the disease, as it leads to early appearance of the disease, on young stages of the plant growth and results in severe damage.

So far prevention or control of bacterial plant diseases by chemical means has provided only a partial solution of the problem. Known treatments against bacterial pathogens in plant can be divided into two categories.

i) Disinfection of seeds: This treatment aims at lowering the primary infection existing on or in the seed. The disinfection is effected by chemical and/or thermal treatments, the chemical treatment involving the use of copper or mercury compounds, both of which have however been found to be not quite satisfactory and affording only partial control of bacterial pathogens. It is important in this connection to note that control of bacterial pathogens on seeds must be complete because even low percentage of seeds carrying live bacteria constitutes a primary infection center in the field from which the disease spreads rapidly.

ii) Foliage spraying of bacterially infected grownup plants in the field. Most of the commercial products available for this purpose are copper products. The copper increases the lipophilic character of the bacterial cell walls and thus makes them more penetrable. This permeability in turn enables the copper to get into the material cell and poison its metabolic pathways. Here again the efficacy of the treatment has been found to be unsatisfactory.

Various antibiotic products have high activity against bacterial plant pathogens but this group of products is usually forbidden for agricultural use. It has also been reported that copper compounds may be combined with other antibacterial agents such as antibiotics for the prevention and control of bacterial diseases, but the activity established in this way was mostly additive. Apart from the fact that this effect was to be expected it has, as far as antibiotics are concerned, the above shortcoming that antibiotics are forbidden for use in agriculture.

5-Ethoxy-3-(trichloromethyl)-1,2,4-thiadiazole, also known under its generic name etridiazole, is a known compound which is described, for example, in U.S. patents, 3,260,688 and 3,260,725. It is known to be a fungicide that is mostly used against fungi of the Phycomycetes class. Its main use is in the control of plant diseases caused by species of Pythium and Phytophtora or, in combination with pentachloronitrobenzene (PCNB) as a wide spectrum antifungal agent for damping-off fungal diseases that affect germination and emergence of crops.

It has further been found that etridiazole is active against the soil bacteria nitrosomonas and nitrobacter which are responsible for soil nitrification and etridiazol is accordingly used commercially as an inhibitor of the nitrification process in the soil. However, no antibacterial properties could be found other than against nitrosomonas and nitrobacter bacteria.

In accordance with the present invention it has surprisingly been found that when etridiazole and a copper compound are combined with each other, there occurs a synergistic effect between them resulting in an antibacterial composition suitable for the prevention and control of bacterial diseases in plants. This discovery was completely surprising and could not have been anticipated in any way from the prior art which teaches that etridiazole has no antibacterial activity other than against nitrozomonas and nitrobacter bacteria, and that any enhancement of the antibacterial properties of copper compounds was only on a purely additive basis.

In the following specification and claims the compound 5-ethoxy-3-(trichloromethyl)-1,2,4-thiadiazole will be referred to by its generic name etridiazole. Also, whenever the term "copper" is used in the context of a composition, it refers to the copper atom or copper cation moiety of a copper compound.

SUMMARY OF THE INVENTION

In accordance with the present invention there is provided an antibacterial composition comprising at least one copper compound and etridiazole.

Any suitable copper compound can be used, e.g. a salt such as copper acetate, copper hydroxide, copper oxychloride, copper sulfate and many others.

The compositions according to the invention can be in form of wettable powderous or liquid concentrates which in addition to the active ingredients may also contain a solid carrier substance in case of a powder, e.g.silica, caolin, etc.; a solvent in case of a liquid concentrate such as various aromatic solvents, e.g. kerosene, xylene, toluene, acetone, etc. Such concentrates may also contain additives such as emulsifiers, stabilizers and the like.

The compositions according to the invention may also be in form of dusting powder.

In addition to their novel and unexpected antibacterial effect the compositions according to the invention may also exert the known antifungal effect of etridiazole and they may thus be used for combined antibacterial and antifungal treatments. Hereinafter the various beneficial effects obtainable by means of compositions according to the invention will at times be referred to indiscriminately as antipathogenic effect.

For enhancement of the antipathogenic effect compositions according to the invention may include additives such as, for example, acid, surfactants and pentachloronitrobenzene (PCNB).

Where the copper compound in a composition according to the invention is a salt of a salt forming acid the composition may also comprise said salt forming acid in free acid form. For example, when the copper compound is copper acetate or copper citrate the composition may comprise free acetic acid or citric acid respectively.

The antibacterial compositions according to the invention can be used for the disinfection of seeds and the treatment of plant foliage. In either case the treatment may be with a liquid composition or a dusting powder which composition of powder contains copper compound and etridiazole in effective amounts that produce the desired antipathogenic synergistic effect while not being phytotoxic to the treated plants.

Where a liquid composition is used it may be prepared in situ by dilution of a powderous or liquid concentrate with a suitable amount of water. Dusting powders will usually be readily available with the desired concentration of copper compound and etridiazole without need for further dilution, but may also appear as a concentrate that needs dilution with inert powder.

The invention thus also provides a method for the prevention and control of bacterial plant diseases wherein seeds are treated with an antibacterial composition comprising a copper compound in an amount corresponding to at least 0.04% by weight of copper and etridiazole in an amount of at least 0.015% by weight.

The invention further provides a method for the prevention and control of bacterial plant diseases where plant foliage is treated with an antibacterial composition comprising a copper compound in an amount corresponding to at least 0.03% by weight of copper and etridiazole in an amount of at least 0.2% by weight.

For both the treatment of seeds and plant foliage liquid compositions or dusting powder may be used. In either case the composition may comprise an additive for enhancing the antipathogenic effect, e.g. a member of the group of acids, surfactants and pentachloronitrobenzene.

Where in practicing the methods of this invention a composition is used in which the copper compound is a salt with a salt forming acid, such composition may also comprise said salt forming acid in free acid form.

## DESCRIPTION OF PREFERRED EMBODIMENTS

The invention will now be described by means of a number of trials which demonstrate the novel and unexpected antibacterial properties of a mixture of etridiazole and a copper compound.

I. Control of bacterial diseases by seeds' disinfection

This study was divided into three parts: 1. Preliminary trials. 2. Seed disinfection trials against bacterial diseases. 3. Phytotoxic trials. Preliminary trials to examine the efficacy of etridiazole against bacterial pathogens were carried out with the commercial etridiazole product Terrazole (trade mark). Later on, trials were carried out with the commercial product Terra-coat (trade mark) which contains etridiazole and PCNB (pentachloronitrobenzene) and is destined for seed disinfection against fungal diseases. In addition, trials were conducted to study possible phytotoxic effects.

Materials and Methods:

A. The bacterial diseases examined were:

1. Bacterial spot of pepper - Xanthomonasvesicatoria

2. Bacterial specic·of tomato - Pseudomonastomato

3. Black rot of cabbage - Xanthomonascampestris

4. Angular leaf spot of cucumber - Pseudomonas lachrimans

5. Bacterial strip of wheat - Anthomonastranslucens

6. - Pseudomonascorugata

B. The products examined:

1. Terrazole 4L EC (trade mark) which contains 48% of etridiazole.

2. Cupric acetate, technical 95%.

3. Terra-coat L205 (trade mark), liquid containing 23.2% PCNB and 5.8% etridiazole.

4. Acetic acid, (IN) contains 60 g/l.

The products were used alone and in mixtures containing different ratios of etridiazole, cupric acetate and acetic acid.

C. Medium for the bacterial cultures:

I. Culture for Pseudomonas: King's medium B agar (Difco pseudomonas agar F).

II. Culture medium for Xanthomonas:

1. Modified SX (Schaad and White 1984).

2. YDC medium (yeast-extract, dextrose, CaCO₃).

D. Infection of seeds:

Trials for checking the efficacy of chemical treatments against bacterial disease pathogens were carried out on naturally infected seeds, or on seeds artificially infected with suspension of the bacteria. In cases where the seeds were artificially infected, the seeds were dipped for a couple of minutes in suspensions of bacteria which were grown in suitable conditions. The suspensions with the seeds were incubated in vacuum for 15 minutes, and then the seeds were dried and ready for trials.

E. Disinfection process:

In all trials, seed disinfection was carried out by dipping the seeds in different chemical solutions. The variable factors were:

1. Different times of dipping: 10, 20, 30 and 60 minutes.

2. Different temperatures of dipping: room temperature (20°C), and a higher temperature (45°C).

F. Evaluation of the disinfection efficacy:

The efficacy of the disinfection was examined in a number of ways:

1. Efficacy evaluation in petro-dishes.

In this method, live bacterial pathogens that survived the seed disinfection, were counted. Treated seeds were dried by vaporization. Five grams of dried seeds from each treatment were ground in a grinder of 20 mesh and transferred to a solution containing 0.1% agar in water and were shaken for 30 minutes. From each sample, 10x dilutions were prepared. From each of the various dilutions, 0.1 ml was taken and placed in a suitable medium in a petri-dish, with a Drigalski stick. After 4 days of incubation at temperature of 27°C, colonies of the bacterial pathogens were counted in each petri-dish. The number of live bacteria in each diluted solution was calculated to give the number of live pathogens in one gram of treated seeds.

2. Improved MPN system:

This method is essentially similar to the previous one. In the MPN system, the number of pathogenic bacteria in one gram of seeds is statistically calculated when only one species of bacteria is present.

3. Bio assay method:

In this method, the efficacy of the disinfection is examined by a bioassay. After seed disinfection, the seeds are dried and sown in the soil, and kept in a humid cell with suitable temperature. The efficacy of the treatment is determined by the level of infestation in the seedlings.

G. Evaluation of product activity by direct contact with the bacteria:

The efficacy of a number of products by a direct contact with the bacteria was checked as follows: Preparation of solutions of different concentrations of the examined products. Soaked bacteria suspension in the solutions for a period of 10 minutes. Filtration of the solution containing bacteria through milipore disc, so that the bacteria are concentrated on the disc. Rinsing the disc with distilled water. Placing the disc in a measured amount of water with 0.1% agar, and shaking the disc in this solution in order to transfer the bacteria from the disc to the solution. Making 10x dilutions and direct placing on suitable medium (see section F1 above).

H. Phytotoxicity examinations:

Phytotoxicity studies were made by disinfecting the seeds in the different treatments at different temperatures and periods of time and then sowing them in soil. The time and percent of emergence, and seedling development up to age of 3-4 true leaves, were evaluated.

RESULTS

Preliminary trials

In some preliminary trials, cupric acetate, acetic acid and etridiazole (in Terra-coat, trade mark) were examined alone and in mixtures containing different proportions, against four bacteria pathogens: Pseudomonas tomato, Xanthomonasvesicatoria, X. translucens, X. campestris. The examinations were carried out by direct contact between the products and the bacteria (see Materials and Methods, paragraph G).

Trial 1

In this trial, 11 concentrations of cupric-acetate in aqueous solution were checked, from 0.001 - 0.8% by weight. Six concentrations of acetic acid from 0.0001N to 0.5N were also examined. All treatments were checked against the four species of bacteria mentioned.

Increase of the copper concentration in the solution improved the efficacy of the solution, but even at the high concentration of 0.8% cupric acetate there was not absolute control of bacteria and in each case of the four species of bacteria that were examined, about $10^3$ bacteria per cm² of water remained alive.

Acetic acid was found to have low efficacy against the examined bacteria and even at concentration of 0.5N, a level of $10^4$ bacteria per cm² of water was found alive after treatment.

This trial then shows that copper has a certain, though unsatisfactory antibacterial effect.

Trial 2

Nineteen concentrations of etridiazole in form of Terra-coat (trade mark) from 50 ppm to 2000 ppm in aqueous solution were examined. The level of bacteria in the untreated control solutions of the four bacteria species was about $1 \times 10^7$ bacteria/cm² while zole (2000 ppm) a level of $10^6$ live bacteria/cm² was found. Efficacy of etridiazole against bacteria was very low, in this trial. This trial then confirms that etridiazole has practically no antibacterial effect.

Trial 3

In this trial, combinations of cupric acetate and acetic acid in a mixture, were evaluated (24 treatments). Eight concentrations of cupric acetate from 0.02% to 0.8% were examined with four concentrations of acetic acid (0.001N - 0.05N).

A mixture that contained high concentrations of cupric acetate and acetic acid was slightly more effective than each one of the products alone, but there was still an uncontrolled level of $10^2$ live bacteria/cm² water. There were no differences in the sensitivity of the four species of bacteria.

Trial 4

In this trial, combinations of different mixtures that contained 9 concentrations of etridiazole, from 10 ppm to 500 ppm; 6 concentrations of cupric acetate, from 0.08% to 0.8%; and 4 concentrations of acetic acid, from 0.001N to. 0.05N, were evaluated (a total of 18 treatments). The surfactant Triton X100 (trade mark), was added to all the treatments in an amount of one drop to each half liter. Results are presented in Table I and they clearly demonstrated the synergistic antibacterial effect of copper and etridiazole.

## Table I

Effect of different combinations of etridiazole, cupric acetate and ecetic acid in mixtures, on the control of four species of bacteria pathogens. Numbers express an average number of live bacteria per 1 $cm^2$ of water, in 3 replicates.

| Concentration in the mixtures | | | Number of live bacteria in 1 $cm^2$ of water | | | |
|---|---|---|---|---|---|---|
| Acetic acid (N) | Cupric Acetate (%) | Etridiazole (ppm) | P. tomato | X. vesicatoria | X. campestris | X. translucens |
| 0.05 | 0.8 | 10 | $8 \times 10^2$ | $1.3 \times 10^2$ | $2.2 \times 10^2$ | $1 \times 10^2$ |
| 0.05 | 0.8 | 50 | $5.5 \times 10^2$ | $0.9 \times 10^2$ | $1.7 \times 10^2$ | $0.7 \times 10^2$ |
| 0.05 | 0.8 | 100 | $4.6 \times 10^2$ | $0.7 \times 10^2$ | $0.6 \times 10^2$ | $0.3 \times 10^2$ |
| 0.05 | 0.8 | 150 | 82 | 14 | 26 | 13 |
| 0.05 | 0.8 | 200 | 0 | 0 | 0 | 0 |
| 0.01 | 0.8 | 200 | 0 | 0 | 0 | 0 |
| 0.005 | 0.8 | 200 | 0 | 0 | 0 | 0 |
| 0.001 | 0.8 | 200 | 3 | 0 | 1 | 2 |
| 0.005 | 0.6 | 200 | 0 | 0 | 0 | 0 |
| 0.005 | 0.4 | 200 | 0 | 0 | 0 | 0 |
| 0.005 | 0.2 | 200 | 0 | 0 | 0 | 0 |
| 0.005 | 0.1 | 200 | 58 | 18 | 32 | 11 |
| 0.005 | 0.1 | 250 | 0 | 0 | 0 | 0 |
| 0.005 | 0.08 | 250 | $17 \times 10^2$ | $11 \times 10^2$ | $3.4 \times 10^2$ | $0.7 \times 10^2$ |
| 0.005 | 0.08 | 300 | $16 \times 10^2$ | $11 \times 10^2$ | $3.1 \times 10^2$ | $0.6 \times 10^2$ |
| 0.005 | 0.08 | 400 | $16 \times 10^2$ | $10 \times 10^2$ | $2.7 \times 10^2$ | $0.7 \times 10^2$ |
| 0.005 | 0.08 | 500 | $14 \times 10^2$ | $9 \times 10^2$ | $2.5 \times 10^2$ | $0.5 \times 10^2$ |
| 0 | 0 | 0 | $6.1 \times 10^7$ | $3.4 \times 10^7$ | $6.8 \times 10^7$ | $4.1 \times 10^7$ |

Seed Disinfection against Bacterial Diseases

The following are results of seed disinfection trials in some crops:

Trial on Pepper

Trial 5

This trial was carried out in pepper seeds Var.Maor, naturally infected by Xanthomonasvesicatoria. Seeds were dipped in various treatments for 10 minutes at room temperature. Results are presented in Table II.

Table II


Effect of different seed disinfection treatments
on the control of Xanthomonas vesicatoria in pep-
per. Numbers express the numbers of live bacteria
in 1 gram of seeds.

| No. | Treatment | Concentration (%) | Number of bacteria per 1 gr. seeds | Percent of control |
|---|---|---|---|---|
| 1 | etridiazole[1] | 0.025 | 438 | 57.2 |
| 2 | cupric acetate + acetic acid[2] | 0.1 | 369 | 63.9 |
| 3 | etridiazole + cupric acetate[3] | 0.025 + 0.1 | 0 | 100.0 |
| 4 | Check (water) | - | 1023 | 0 |

(1)    Etridiazole was calculated as active ingredient in
      Terra-coat (trade mark).

(2)    Acetic acid - 0.005N.

(3)    Treatment 3 included etridiazole + cupric acid,
      and also acetic acid 0.005N, and a droplet of the
      surfactant Triton X100 (trade mark) (less than
      0.5cc in half a liter solution).


One can see from the results in Table II that the disinfection of infected pepper seeds with a mixture of etridiazole and cupric acetate resulted in complete control of the examined bacteria, in comparison with only partial control of the bacteria by each of the individual components alone.

Trial 6

The purpose of this trial was to evaluate commercially the efficacy of the mixture that was already examined in Trial 5 in disinfecting pepper seeds either infested with $\underline{X}$. vesicatoriaor not (control). Disinfected seeds and control seeds were sown in two fields. The assessment included a) examination of the level of bacteria in the leaves of the pepper plants; and b) examination of the level of bacteria in the seeds of the pepper fruits, at the end of the pepper life cycle. The results are presented in Tables III and IV.

## Table III

Amount of bacteria found in leaves of pepper plants that were grown from treated and untreated seeds. Numbers express an average number of bacteria in 1 gr. of leaves.

| Treatment | Field a | Field b |
|---|---|---|
| Disinfected seeds (1) | 0 | 0. |
| Control seeds | 350 | 150 |

(1)   Seeds were disinfected in a mixture containing etridiazole 0.025% + cupric acetate 0.1% + acetic acid 0.005N.

## Table IV

Amount of bacteria found in the seeds of pepper fruits which were harvested from plants that were treated at their seed stage.

| Treatment | Field a | Field b |
|---|---|---|
| Disinfected seeds (1) | 0 | 0 |
| Control seeds | 1226 | 482 |

(1)   Seeds were disinfected in a mixture containing etridiazole 0.025% + cupric acetate 0.1% + acetic acid 0.05N.

The results in Table IV are actually an advanced stage of trials whose results are presented in Table III. It can be seen that seeds that were disinfected by the mixture gave healthy plants which produced uninfested seeds. Infested seeds that were not treated by the mixture gave plants that carried the bacterial pathogens and produced infested seeds.

Note: In addition to the above-mentioned trials, large amounts of pepper seeds were disinfected by the mixture and were sown in fields in different regions of the country. In all cases the seedlings were healthy and without phytotoxic symptoms.

Trials on Tomatoes

In tomatoes, disinfection trials were carried out against two bacterial diseases. Most of the work was done in order to examine the efficacy of the mixtures in controlling bacterial specic of tomato caused by Pseudomonas tomato. Later on some trials were carried out against a relatively new disease in Israel - "rotten pith" caused by P. corugata.

Trial 7

In the trial that was carried out against bacterial specic of tomato, various concentrations of cupric acetate, etridiazole and combinations of both of them, were evaluated. Also, different dipping times and temperatures were checked. Efficacy of disinfection was evaluated by assessing the disease appearance in the seedlings which was caused by infection of the treated seeds. Results are presented in Table V.

## Table V

Efficacy of disinfection of P. tomato infected tomato seeds by different treatments, temperatures and times of dipping. Numbers express percents of infected plants:

| No. | Treatment | Concentration (%) | Dipping time (minutes) | Temp. °C | % Infected plants | Improvement in control, in comparison with the untreated control |
|---|---|---|---|---|---|---|
| 1 | cupric acetate | 0.1 | 10 | 40 | 17.0 | 62.2 |
| 2 | cupric acetate | 0.1 | 10 | 25 | 28.0 | 37.8 |
| 3 | cupric acetate | 0.1 | 20 | 40 | 14.0 | 68.9 |
| 4 | cupric acetate | 0.1 | 20 | 25 | 27.5 | 38.9 |
| 5 | etridiazole[1] | 0.015 | 10 | 40 | 34.0 | 24.4 |
| 6 | etridiazole | 0.015 | 10 | 25 | 38.8 | 13.8 |
| 7 | etridiazole | 0.015 | 20 | 40 | 29.8 | 33.8 |
| 8 | etridiazole | 0.015 | 20 | 25 | 40.0 | 11.1 |
| 9 | etridiazole | 0.025 | 10 | 40 | 33.4 | 25.8 |
| 10 | etridiazole | 0.025 | 10 | 25 | 39.0 | 13.3 |
| 11 | etridiazole | 0.025 | 20 | 40 | 28.2 | 37.3 |
| 12 | etridiazole | 0.025 | 20 | 25 | 21.0 | 53.3 |
| 13 | etridiazole + cupric acetate[2] | 0.025 + 0.1 | 10 | 40 | 3.0 | 93.3 |
| 14 | etridiazole + cupric acetate | 0.025 + 0.1 | 10 | 25 | 6.0 | 86.7 |
| 15 | etridiazole + cupric acetate | 0.025 + 0.1 | 20 | 40 | 0 | 100 |
| 16 | etridiazole + cupric acetate | 0.025 + 0.1 | 20 | 25 | 1.0 | 97.8 |
| 17 | Check (water) | — | - | - | 45.0 | 0 |

(1) In treatment 5-12 etridiazole was in Terra-coat (trade mark).
(2) In treatments 13-16 acetic acid 0.005N and a small amount of Triton X100 (trade mark) were added to the mixture of etridiazole and cupric acetate

From the results in Table V, it is evident that etridiazole had very low activity at the examined concentrations without any significant effect of the dipping time and the temperature. Treatment with cupric acetate was more effective but still insufficient. With this treatment disinfection at 40°C gave better results than at 25°C while the dipping time made no difference. Mixtures containing etridiazole and cupric acetate with the addition of acetic acid and surfactant were very effective in seeds' disinfection. In this treatment, a long dipping time and high temperatures improved the disinfection process.

Trial 8

The efficacy of the mixture in disinfecting seeds infected with pith rot caused by Pseudmonascorugata was examined. Infected tomato seeds were dipping in the mixture [etridiazole as Terra-coat (trade mark) 0.025% + cupric acetate 0.1% + acetic acid 0.005N] at different times and temperatures, and compared with thermal disinfection which is the standard treatment of tomato seeds.

We found that disinfection with the mixture was more effective than the thermal treatment. Complete control of the bacteria in the seeds was achieved when seeds were dipped in the mixture at 45°C for 60 minutes.

Trials on Cabbage and Cauliflower

Trials were carried out in seeds of cabbage and cauliflower infested with Xanthomonas campestris. In one trial of cabbage, that included 36 treatments, the following treatments were checked: etridiazole as Terra-coat (trade mark) at concentrations from 0.015% to 0.1%, cupric acetate at 0.1%, mixtures of both at different ratios and 0.005N acetic acid. Seeds were dipped in all treatments for 10 to 20 minutes at temperatures of 25°C and 45°C.

Trial 9

The efficacy of the disinfection process was checked in a bio assay system. Results are presented in Table VI.

## Table VI

Efficacy of different treatments, temperatures and times of dipping in disinfection of cabbage seeds against X. campestris. Numbers express percent of infected seedlings.

| No. | Treatment | Concentration (%) | Percent of infected seedlings | | | |
|-----|-----------|-------------------|------------------|------------------|------------------|------------------|
| | | | 25°C 10 min. | 40°C 10 min. | 25°C 20 min. | 40°C 20 min. |
| 1 | cupric acetate | 0.1 | 78.6 | 45.0 | 56.0 | 35.0 |
| 2 | etridiazole | 0.015 | 76.6 | 64.6 | 72.2 | 52.1 |
| 3 | etridiazole | 0.025 | 61.5 | 55.0 | 69.0 | 57.4 |
| 4 | etridiazole | 0.05 | 69.9 | 46.4 | 70.6 | 52.1 |
| 5 | etridiazole | 0.1 | 66.2 | 48.6 | 62.8 | 44.9 |
| 6 | etridiazole + cupric acetate[1] | 0.025+0.1 | 12.9 | 10.1 | 12.5 | 4.3 |
| 7 | etridiazole + cupric acetate[1] | 0.05 +0.1 | 16.9 | 5.7 | 12.5 | 7.3 |
| 8 | etridiazole + cupric acetate[1] | 0.1 +0.1 | 13.2 | 12.5 | 8.8 | 5.4 |
| 9 | Check (water) | - | 70.4 | 59.1 | 69.5 | 56.3 |

(1) The mixture contained also acetic acid 0.005N.

From the results in Table VI it appears that etridiazole at various concentrations was not effective in disinfecting the seeds. The changing conditions of temperatures or dipping times did not affect these results. The activity of cupric acetate was low to moderate and it changed with the trial conditions. Dipping the seeds at 40°C gave better results than in 25°C. Dipping the seeds for 20 minutes gave better results than 10 minutes, but at any case cupric acetate did not provide more than 38% disease control.

Disinfection of seeds in a mixture containing cupric acetate + etridiazole was very effective in decreasing the black rot disease and was better than with either of the individual products. There were no differences among mixtures that contained different amounts of the chemicals. Combination of the high temperature (40°C) and dipping time for 20 minutes gave the best results - 92% control in comparison with the untreated seeds. In other trials, large amounts of infected seeds of cauliflower were disinfected by dipping them in the above mixture, and then sown in the field or in a greenhouse. In all cases, the mixture that contained etridiazole 0.025% + cupric acetate 0.1% + acetic acid 0.005N, was very effective and prevented appearance of the disease on the seedlings.

Trials on Wheat

Experiments were carried out in order to find an effective control of bacterial strip of wheat caused by X. translucens in seeds of wheat. Here also, the efficacy of a mixture containing etridiazole, cupric acetate and acetic acid in a disinfection process was examined in comparison with each of the products alone and in various dipping times. The assessment of efficacy was carried out by counting of the number of bacteria that remained alive in the seeds after the disinfection and in a bio-assay system. (See Materials and Methods).

Trial 10

In this trial the efficacy of the products in disinfecting wheat seeds was tested at various periods of time from 5 to 60 minutes. Disinfected seeds were compared with seeds treated with water (check) and with seeds that were defined in laboratory as seeds clean from the pathogen. Efficacy of the treatments was measured by counting the amount of bacteria that remained alive in the seeds. The trial was carried out in five replicates. Results are presented in Table VII.

## <u>Table VII</u>

### Efficacy of products in disinfecting wheat seeds. Numbers express an average number of bacteria per 1 gr. seeds.

| No. | Treatment | Infection of seeds | Bacteria per gr. seeds | | |
|---|---|---|---|---|---|
| | | | 5 minutes | 10 minutes | 20 minutes |
| 1 | etridiazole 0.025% | + | 8120 a** | 8040 a | 7780 a |
| 2 | cupric acetate 0.1% | + | 6040 b | 2920 b | 496 b |
| 3 | etridiazole 0.025% + cupric acetate 0.1%* | + | 294 c | 3.2 c | 0 c |
| 4 | Check (water) | + | 8000 a | 7620 a | 7960 a |
| 5 | Check (water) | - | 5.4 c | 5.4 c | 5.4 c |

\*      The mixture contained also acetic acid 0.005N, and a very small amount of surfactant Triton X100 (trade mark).

\*\*      Numbers followed by different letters differ significantly at 0.05.

From Table VII it is apparent that etridiazole was not effective in decreasing the level of seed infection. Disinfecting the seeds with cupric acetate was significantly more effective, and was improved when the dipping time was longer and at 20 minutes. Under these conditions there was 94% control in comparison with the untreated seeds. Dipping time of more than 20 minutes (even 60 minutes) did not improve the control. Disinfecting the infected wheat seeds with the mixture was significantly more effective than any other treatment and afforded a control of over 99.9% after a dipping time of 10 minutes. Disinfecting the seeds with this mixture by dipping more than 10 minutes gave a complete control of the bacteria.

Trial 11

In this trial, carried out at four replicates, the disinfection efficacy of the mixture was tested, as in Trial 10, in infected and uninfected seeds. After treatment, the seeds were sown in light soil and put in a fog chamber at 20°C. The percent of seedling emergence and thé disease incidence in them, were checked. Results are presented in Table VIII.

## Table VIII

Disinfection of infected and uninfected wheat seeds (by X. translucens) and its effect on seedling emergence and appearance of bacterial strip diseas after sowing. Numbers express an average number of infected seeling out of the emerged seedling.

| No. | Treatment | Percent of emerged seedlings | % of infected seedling Days after sowing | | | |
|---|---|---|---|---|---|---|
| | | | 25 | 29 | 34 | 38 |
| 1 | Uninfected seeds, not disinfected | 70 | 0 | 0 | 1.4 | 2.8 |
| 2 | Uninfected seeds, disinfected[2] | 62 | 0 | 0 | 0 | 0 |
| 3 | Preinfected seeds[1], not disinfected | 67 | 10.4 | 41.8 | 100 | 100 |
| 4 | Preinfected seeds[1], disinfected[2] | 63 | 0 | 0 | 7.9 | 20.6 |

(1)    Artificially infected seeds.

(2)    Disinfection was conducted by dipping the wheat seeds for 10 minutes in the mixture containing etridiazole as Terra-coat (trade mark) - 0.025% + cupric acetate 0.1% + acetic acid 0.005N.

From Table VIII it is apparent that the disinfection of infected wheat seeds was very efficient. It is difficult to know if the disease that appeared in the disinfected seeds about eight days after it had appeared in undisinfected seeds, was a result of a primary infection in the seeds, or a result of a secondary infection from neighbouring infected plants in treatment 3. Also in plants from uninfected not disinfected seeds (treatment 1), the disease appeared eight days later than in treatment 3 but in a very low level.

The mixture does not appear to have any negative effect on emergence and development of the seedlings.

Phytotoxicity Trials

Phytotoxicity trials were carried out by dipping the seeds in solutions that contained various concentrations of mixture compounds. Thirty-six treatments with four concentrations of Terra-coat SD 205 (trade mark) (from 150 ppm to 1,000 ppm), cupric acetate 0.1% (plus acetic acid 0.005N) and various combinations of these chemicals were evaluated. Disinfections were carried out either at room temperature or at 40°C and at two dipping times of 10 to 20 minutes. Treatments were compared with undisinfected seeds dipped in water.

Trial 12

In cauliflower: Percent of seedling emergence in the check treatment was about 70%. Terra-coat alone did not cause any inhibition or damage to the seedling emergence. Treatment with cupric acetate slightly lowered the level of seedling emergence, and so did the combinations of Terra--coat and cupric acetate. Time of dipping had little effect, and the effect of temperature was negligible. There were no differences in the development of the seedlings in the treatments.

Trial 13

In tomatoes: the percent of emergence in all treatments (including check treatment) was 91%. There were no negative effects of the various treatments on the emergence and development of the tomato seedlings.

Trial 14

In pepper: There were no signs of damage on the plants. Inpeppers, many field trials were also carried out in which no negative effects were found of Terra-coat (trade mark) or copper alone, or of combinations of the two.

II. CONTROL OF BACTERIAL DISEASES BY FOLIAGE SPRAYINGS

This study was divided into two parts: 1. Foliage sprayings against bacterial diseases in order to evaluate the efficacy of different solutions in preventing or controlling bacterial diseases, and 2. Phytotoxicity trials. Trials were carried out in tomatoes, peppers and cauliflower. Most of the trials were carried out under controlled conditions in the greenhouse and others in the open field.

Materials and Methods

1. The examined diseases

The trials were carried out against bacterial diseases in the following crops:

a. In pepper - Bacterial spot of pepper (Xanthomonas vesicatoria).

b. In tomatoes - Bacterial specic of tomato (Pseudomonas tomato).

c. In cauliflower - Black rot (Xanthomonas campestris).

2. The tested products

a. Etridiazole (see materials and methods in the chapter of seed disinfection) was tested as Terrazole (trade mark) in two formulations, emulsifiable concentrate and flowable, both containing 48% etridiazole active ingredient.

b. Cupric acetate - 95% active ingredient.

c. Kocide 101 (trade mark): copper hydroxide in wettable powder formulation, containing 77% copper hydroxide.

3. Plants

In trials that were carried out in the greenhouse, plants at age of 3 - 5 leaves that were grown in "speedling system", were used. Plants were allowed to grow in the original trays without contact between them.

4. Infection of the plants with bacteria

About 48 hours before the infection, the bacterial pathogen was transferred (for multiplication) to a suitable growth medium (see materials and methods of para I hereinbefore)at optimal temperature until all the medium was covered by bacteria. Then a suspension of bacteria at concentration of $1 \times 10^6$ - $1 \times 10^7$ per $cm^2$ was prepared. The bacterial suspension was sprayed to runoff with a hand sprayer on to the leaves of the test plants. Spraying was made on dry leaves with the addition of carborundum to the spray solution in order to ensure better infection. In trials where the efficacy of the treatments was evaluated in preventative treatments, the application was given a few hours before the bacterial infection.

5. Application

In the preventative treatments, the products were applied a few hours before the bacterial infection. In the curative treatments, the application was carried out 20 hours after bacterial infection. After application, when plants dried out they were transferred to a fog chamber with controlled conditions.

6. Growing conditions

In trials that were carried out in the greenhouse, the plants were transferred after the application and infection, to control conditions of fogginess and suitable temperatures for bacteria, till the end of the trial.

7. Evaluation of infection

Infection was evaluated in the seedlings according to the following key: 0 = healthy seedling, without symptoms of disease, 5 = complete coverage of the seedling with spots of disease, or dead seedling. The intermediate degrees were given according to the severity of the disease in the leaves.

As already mentioned, this study was divided into two parts: 1) Foliage sprayings against bacterial diseases. 2) Phytotoxicity tests.

RESULTS

Foliage Sprayings against bacterial diseases Trials on Tomatoes

In tomatoes, several trials were carried out in greenhouse under conditions of fog chamber and artificial infection in order to evaluate the efficacy of Terrazole (trade mark) and copper, in different rates and combinations, in preventing and controlling bacterial diseases specic of tomato caused by Pseudomonastomato.

Trial 16

In one trial, various treatments were examined in prevention of disease, as appears in Table IX.

## Table IX

Efficacy of Tarrazole (trade mark) and copper products at different rates and combinations, applied as preventative sprayings on tomato seedlings against bacterial diseases specic of tomato. Results express the percent of ill seedling, ten days after the infection.

| No. | Treatment | Concentration (%) | Percent of ill seedlings |
|---|---|---|---|
| 1 | Terrazole * | 0.1 | 91.7 |
| 2 | Terrazole * | 0.2 | 91.6 |
| 3 | Cupric acetate | 0.1 | 34.2 |
| 4 | Kocide 101* | 0.3 | 27.0 |
| 5 | Terrazole* + cupric acetate | 0.2 + 0.1 | 10.3 |
| 6 | Terrazole* + Kocide 101* | 0.2 + 0.3 | 7.9 |
| 7 | Check (water spraying) | - | 100.0 |

*Trade Mark

Table IX shows that etridiazole alone was not effective at the tested concentrations. Kocide 101 (trade mark) was were moderately effective in preventing the bacterial specic disease, being slightly more effective than cupric acetate. Combinations of Terrazole (trade mark) with cupric acetate or Kocide 101 (trade mark) were very effective. There were no differences between the two types of copper products, in their contribution to the performance of the combination.

Trial 17

In another trial, additional combinations of etridiazole and copper were tested in order to determine the best treatment. Results are presented in Table X.

## Table X

Efficacy of etridiazole and copper at different rates and combinations, applied as preventative sprayings, for preventing bacterial specic disease in tomato seedlings, 9, 11 and 13 days after infection with the pathogen. Figures express the average level of seedlings infected at levels 0-5[1].

| No. | Treatment | Concentration (%) | Average level of ill seedlings | | |
|---|---|---|---|---|---|
| | | | Days after infection | | |
| | | | 9 | 11 | 13 |
| 1 | Terrazole* | 0.2 | 0.80 | 2.35 | 2.75 |
| 2 | Terrazole* | 0.4 | 0.75 | 2.50 | 2.75 |
| 3 | Kocide 101* | 0.3 | 0.40 | 1.90 | 2.45 |
| 4 | Kocide 101* | 0.5 | 0.70 | 1.90 | 2.50 |
| 5 | Cupric acetate | 0.15 | 0.30 | 1.85 | 2.80 |
| 6 | Terrazole*+ Kocide 101* | 0.2 + 0.3 | 0.05 | 0.70 | 1.00 |
| 7 | Terrazole*+ Kocide 101* | 0.2 + 0.5 | 0.65 | 1.80 | 2.10 |
| 8 | Terrazole*+ Kocide 101* | 0.4 + 0.3 | 0.05 | 0.45 | 0.65 |
| 9 | Terrazole*+ Kocide 101* | 0.4 + 0.5 | 0.25 | 1.35 | 1.60 |
| 10 | Terrazole*+ cupric acetate | 0.2 + 0.15 | 0.20 | 1.05 | 1.75 |
| 11 | Terrazole*+ cupric acetate | 0.4 + 0.15 | 0.05 | 0.60 | 0.90 |
| 12 | Check (water spraying) | - | 1.15 | 4.25 | 4.55 |

(1) Infection was assessed as follows: 0 = healthy seedling without signs of disease; 5 = seedling completely covered with spots of disease.

* Trade Mark.

From the results in Table X it appears that all the products that were individually sprayed namely, etridiazole, cupric hydroxide and cupric acetate, had a very moderate and similar efficacy in preventing bacterial specic of tomatoes. Combinations of etridiazole with each of the copper products, was significantly more effective in preventing the disease appearance. There were no differences between the efficacy of the copper products in the mixture.

Regarding the rates it seems that the high concentration of the copper hydroxide (Kocide 101, trade mark) in the mixture - 0.5% caused a decrease in the mixture efficacy in comparison with concentration of 0.3%. On the other hand, increasing the concentration of etridiazole in the mixture from 0.2% to 0.4% slightly improved the mixture efficacy.

Trial 17

In winter of 1982/83, two field trials were carried out in tomatoes, in which the efficacy of several products was evaluated against bacterial specic disease of tomatoes under different levels of field infestation. The following are results of a trial conducted when infestation was at a stage of beginning. Seven weekly applications were given (Table XI):

## Table XI

Effect of Terrazole (trade mark) and copper and their combinations on the percent and level of bacterial specic disease infection in plants of tomatoes. Numbers express plant infection out of four replicates, in evaluation that was carried out on 23.3.84.

| No. | Treatment | Concentration (%) | Percent of infected leaves | Infection index (1) |
|-----|-----------|-------------------|----------------------------|---------------------|
| 1 | Terrazole* | 0.2 | 98.3 a | 3.52 a |
| 2 | Terrazole* | 0.4 | 98.3 a | 3.58 a |
| 3 | Kocide 101* | 0.15 | 84.2 ab | 1.52 b |
| 4 | Kocide 101* | 0.3 | 86.7 ab | 1.57 b |
| 5 | Terrazole* + Kocide 101* | 0.4 + 0.15 | 90.8 a | 1.31 bc |
| 6 | Terrazole* + Kocide 101* | 0.2 + 0.3 | 61.7 c | 0.79 c |
| 7 | Terrazole* + Kocide 101* | 0.4 + 0.3 | 70.8 bc | 0.97 bc |
| 8 | Check | - | 95.8 a | 3.47 a |

(1)   Key to infection index:   0 = healthy plants without signs of disease;   5 = plants completely covered with spots of disease.

Remark:   Numbers followed by different letters, differ significantly from one another at 0.05.

* Trade Mark

Table XI shows that etridiazole did not prevent bacterial specic disease. Copper hydroxide was significantly more effective. There was no difference between the two examined concentrations of copper hydroxide. Combination of etridiazole and copper hydroxide was the most efficient treatment and differed significantly from all other treatments. Etridiazole concentrations of 0.2% and 0.4% in the mixture had the same activity while copper hydroxide as Kocide 101 (trade mark) at concentration of 0.15% in the mixture was less effective than of 0.3%.

Trial on Peppers

Trial 17

Some trials were carried out in the greenhouse on pepper by the same method as on tomatoes. The results of two of the trials conducted as prevention treatment are given in the following Tables XII and XIII.

**0 189 971**

## Table XII

Efficacy of preventative application of Terrazole (trade mark), Kocide 101 (trade mark) and their combination, on preventing the appearance of bacterial spot of pepper,11 and 15 days after infection. Numbers express the average level of infection per seedling, in degrees 0 - 5, where 0 = healthy seedling without signs of disease; 5 = seedling completely covered with spots of disease.

| No. | Treatment | Concentration (%) | Days after infection | |
|-----|-----------|-------------------|----|----|
| | | | 11 | 15 |
| 1 | Terrazole * | 0.4. | 4.35 | 4.60 |
| 2 | Kocide 101* | 0.3 | 1.90 | 2.25 |
| 3 | Terrazole* + Kocide 101* | 0.4 + 0.3 | 0.1 | 0.35 |
| 4 | Check | - | 3.65 | 4.80 |

*Trade Mark

## Table XIII

Effect of preventative application of etridiazole, copper hydroxide (as Kocide 101, trade mark) and their combinations, on preventing the appearance of bacterial spot of pepper, four and six days after the infection. Numbers express the average level of infection per seedling in degrees 0-5, where 0 = healthy seedling without symptoms of disease. 5 = seedling completely covered with spots of disease.

| No. | Treatment | Concentration (%) | Days after infection | |
|---|---|---|---|---|
| | | | 4 | 6 |
| 1 | Kocide 101* | 0.15 | 1.90 | 3.75 |
| 2 | Kocide 101* | 0.3 | 0.85 | 2.35 |
| 3 | Terrazole* | 0.4 | 2.30 | 4.10 |
| 4 | Terrazole* + Kocide 101* | 0.4 + 0.15 | 0.80 | 2.35 |
| 5 | Terrazole* + Kocide 101* | 0.2 + 0.15 | 1.20 | 2.95 |
| 6 | Terrazole* + Kocide 101* | 0.4 + 0.3 | 0 | 0.20 |
| 7 | Check | - | 3.35 | 4.85 |

* Trade Mark.

From the results in Table XII and XIII, it is apparent that etridiazole was almost not effective in preventing bacterial spot disease in pepper. Copper hydroxide (Kocide 101, trade mark) was prominently more effective than the other treatments where Terrazole (trade mark) 0.4% + Kocide 101 (trade mark) 0.3% was the most effective mixture against bacterial spot in pepper.

Trials on Cauliflower

Trial 18

In cauliflower, a trial was conducted in order to test the efficacy of the above products in preventing the black rot caused by X. campestris. Results are presented in Table XIV.

## Table XIV

Effect of preventative application of Terrazole (trade mark), Kocide 101 (trade mark) and their combination in preventing the appearance of black rot disease in cauliflower. Numbers express the percent of infected seedlings.

| No. | Treatment | Concentration (%) | Percent of infected seedlings |
|-----|-----------|-------------------|------------------------------|
| 1 | Kocide 101* | 0.3 | 60% |
| 2 | Terrazole* | 0.4 | 75% |
| 3 | Terrazole* + Kocide 101* | 0.4 + 0.3 | 20% |
| 4 | Check | - | 100% |

*Trade Mark

Table XIV shows that Terrazole (trade mark) and Kocide 101 (trade mark) alone had very low activity against black rot in cauliflower, while the mixture was more effective.

2. Phytotoxic examinations

Phytotoxic studies were carried out in cauliflower, pepper and tomato. In these trials etridiazole in form of Terrazole (trade mark) was examined in series of concentrations up to 0.5%, cupric hydroxide in form of Kocide 101 - (trade mark) up to 0.5% and cupric acetate up to 0.2%. Combinations of those products were also checked. Application was by spraying on seedlings of the above crops till runoff.

In pepper and tomato there were no phytotoxic signs on the seedlings. In cauliflower, phytotoxic signs appeared on plants which were sprayed with Terrazole (trade mark) at concentration of 0.3% and higher.

**Claims**

1. An antibacterial composition comprising at least one copper compound and etridiazole.

2. An antibacterial composition according to Claim 1 being in form of a liquid concentrate.

3. An antibacterial composition according to Claim 1 being in form of a wettable powder.

4. An antibacterial composition according to Claim 1 being a dusting powder.

5. An antibacterial composition according to any one of the preceding claims comprising at least one additive for enhancing an antipathogenic effect.

6. An antibacterial composition according to Claim 5 wherein said additive is a member selected from the group consisting of acids, surfactants and pentachloronitrobenzene.

7. An antibacterial composition according to any one of the preceding claims wherein said copper compound is a salt of a salt forming acid.

8. An antibacterial composition according to Claim 7 comprising said salt forming acid in free acid form.

9. A method for prevention and control of bacterial plant diseases wherein seeds are treated with an antibacterial composition comprising a copper compound in an amount corresponding to at least 0.04% by weight of copper and etridiazole in an amount of at least 0.015% by weight.

10. A method according to Claim 9 wherein said composition is liquid.

11. A method according to Claim 9 wherein said composition is a powder.

12. A method according to any one of Claims 9 to 11 wherein said composition comprises at least one additive for enhancing the antipathogenic effect.

13. A method according to Claim 12 wherein said additive is selected from the group consisting of acids, surfactants and pentachloronitrobenzene.

14. A method according to any one of Claims 9 to 13 wherein said copper compound is a salt of a salt forming acid.

15. A method according to Claim 14 wherein the composition comprises said salt forming acid in free acid form.

16. A method for the prevention and control of bacterial plant diseases wherein plant foliage is treated with an antibacterial composition comprising a copper compound in an amount corresponding to at least 0.03% by weight of copper and etridiazole in an amount of at least 0.2% by weight.

17. A method according to Claim 16 wherein said composition is liquid.

18. A method according to Claim 16 wherein said composition is a powder.

19. A method according to any one of Claims 16 to 18 wherein said composition comprises at least one additive for enhancing the antipathogenic effect.

20. A method according to Claim 19 wherein said additive is selected from the group consisting of acids and surfactants.

21. A method according to any one of Claims 16 to 20 wherein said copper compound is a salt of a salt forming acid.

22. A method according to Claim 21 wherein the composition comprises said salt forming acid in free acid form.